# EUROPEAN PATENT APPLICATION

(11) **EP 4 617 831 A1**
(43) Date of publication of application: **17.09.2025**
(21) Application number: 24162830.4
(22) Date of filing: 12.03.2024
(51) Int. Cl.: G06F 3/01

(54) **METHOD AND APPARATUS OF CONTROLLING ONE OR MORE HAPTIC ACTUATORS OF A PERIPHERAL DEVICE**

(71) Applicant: Go Touch VR, 59000 Lille (FR)
(72) Inventor: VEZZOLI, Eric, 59000 LILLE (FR); MACLEOD, Kevin, SAN ANSELMO, 94960 (US)
(74) Representative: RVDB

(57) **Abstract**

There is provided methods and apparatus of controlling a user input element of a peripheral device. To reach that aim, a first travel distance (TD1) associated with a first move (41) of the user input element according to an actuation direction is determined. An actuation signal and a first haptic signal are generated when the first travel distance (TD1) exceeds a first distance (ΔT0). A second travel distance (TD2) associated with a second move (42) of the user input element according to a release direction is determined. A release signal and a second haptic signal are generated when the second travel distance (TD2) exceeds a second distance (ΔR).

## Description

### FIELD

The present application generally relates to the field of haptic and, in particular, to the generating of haptic signal(s) for controlling one or more haptic actuators of a peripheral device to render a haptic effect. The present application also relates to method and apparatus of controlling haptic actuator(s) of a peripheral device in response to a manipulation of a user input element of the peripheral device.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments but is mainly divided into tactile haptic technology and kinesthetic haptic technology: tactile haptic feedback (or tactile haptic effect) refers to sensations such as vibration, friction, or micro-deformation while kinesthetic haptic feedback (or kinesthetic haptic effect) refers to sensations that provide force sensations that can stimulate both mechanical stimuli as well as stimuli related to the position and the movement of the body.

The rendering of haptic feedback or haptic effect is obtained using one or more haptic devices, a haptic device corresponding to an arrangement of one or more haptic actuators, which is/are distributed on one or more body parts of a body of a user. For example, vibrotactile effects might be obtained with the use of haptic devices such as ERMs (Eccentric Rotating Mass), LRAs (Linear Resonant Actuators), large bandwidth actuators like VCM (Voice Coil Motors), PZT (Piezoelectric Actuators), SMA (Shape Memory Alloy) or pressure-based actuators. Kinesthetic effects might be rendered with actuators exercising a force impeding a limb movement, such effects being merely felt on the muscles and tendons than on the skin. Other examples of haptic devices comprise resistive force feedback devices, active force feedback devices and skin indentation devices.

Haptic feedback may be used to increase the feeling of immersion of a user consuming a video content or playing a video game. Haptic feedback may also be used to provide feedback to interactions between a user and a video game or any simulated or virtual content through one or more input elements of a peripheral device such as a game controller, a keyboard, a mouse.

There is room for improvements to the control of a user input element of a peripheral device.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of controlling a user input element of a peripheral device, the method comprising the steps of:
- determining a first travel distance associated with a first move of the user input element according to an actuation direction of the user input element;
- generating an actuation signal and a first haptic signal when the first travel distance is greater than a first threshold representative of a first distance, the first haptic signal being representative of a first haptic effect;
- determining a second travel distance associated with a second move of the user input element according to a release direction of the user input element, the release direction being opposite to the actuation direction, the second move temporally following the first move; and
- generating a release signal and a second haptic signal when the second travel distance is greater than a second threshold representative of a second distance, the second haptic signal being representative of a second haptic effect.

In an exemplary embodiment, the user input element being configured to be in an idle state and in a pressed state, the first move taking the user input element from the idle state to the pressed state, the user input element being in the pressed state at the end of the second move, the method further comprising:
- determining a third travel distance associated with a third move of the user input element according to the actuation direction, the third move temporally following the second move; and
- generating the actuation signal and a third haptic signal when the third travel distance is greater than a third threshold representative of a third distance, the third haptic signal being representative of a third haptic effect.

In an exemplary embodiment, the first, second and third haptic effects correspond to a same haptic effect.

In an exemplary embodiment, the first and third haptic effects correspond to a same effect representative of a transition into an actuated state of the user input element and the second haptic effect is representative of a transition into a released state of the user input element.

In an exemplary embodiment, the second threshold and the third threshold correspond to a same threshold, the second distance being equal to the third distance.

In an exemplary embodiment, the method further comprises adjusting at least one of the first, second and third thresholds.

In a further exemplary embodiment, the method further comprises rendering the first, second and third haptic effects in the user input element based on the first, second and third haptic signal, respectively.

In another exemplary embodiment, the first, second and third haptic effects each correspond to a vibratory effect.

In a further exemplary embodiment, the second distance is less than the first distance and the third distance is less than the first distance.

In an additional exemplary embodiment, each of the determining comprises determining a value representative of a variation in a magnetic field.

According to a second aspect of the present application, there is provided an apparatus of controlling a user input element of a peripheral device, wherein the apparatus comprises a memory associated with at least a processor configured to implement the method in accordance with the first aspect of the present application.

According to a third aspect of the present application, there is provided a peripheral device in accordance with the second aspect of the present application, the peripheral device further comprising a set of user input elements comprising at least one user input element, each user input element of at least a part of the set of user input elements comprising a haptic actuator, each user input element of the set of user input elements and each haptic actuator being communicatively coupled to the apparatus.

According to a fourth aspect of the present application, there is provided a computer program product including instructions which, when the program is executed by one or more processors, causes the one or more processors to carry out a method according to the first aspect of the present application.

According to a fifth aspect of the present application, there is provided a non-transitory storage medium carrying instructions of program code for executing a method according to the first aspect of the present application.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic representation of a peripheral device, in accordance with at least one exemplary embodiment;
**Figure 2** shows a schematic representation of another peripheral device, in accordance with at least one exemplary embodiment;
**Figures 3A and 3B** show a schematic representation of a user input element of the peripheral device of figure 1 or 2, in accordance with at least one exemplary embodiment;
**Figure 4** shows a schematic representation of a control of the user input element of figures 3A and 3B, in accordance with at least one exemplary embodiment;
**Figure 5** shows a schematic block diagram of step(s) of a method of controlling the user input element of figures 3A and 3B, in accordance with at least one exemplary embodiment;
**Figure 6** illustrates a schematic block diagram of an example of an apparatus or system in which various aspects and exemplary embodiments are implemented.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

Exemplary embodiments described hereinafter may be combined with each other or each of the exemplary embodiment may be individually implemented, e.g., as an alternative embodiment.

At least one of the aspects generally relates to a method and apparatus of controlling a user input element of a peripheral device. The peripheral device corresponds to an input device, or an input/output device, configured to be coupled to an electronic device such as a computing device, a game console, a set-top box, a smartphone, a television to interact with contents (e.g., video content, game, application, etc.). The peripheral device may therefore correspond to a game controller (also simply called controller), a keyboard, a mouse, a remote control comprising one or more user input elements such as a key, a button, a trigger.

The peripheral device comprises one or more haptic actuators, such as LRA(s), VCM(s), ERM, PZT and/or SMA.

The control of the user input element comprises the determining or measuring of travel distances associated with successive moves of the user input element for alternatively actuating and releasing the user input element. When a first travel distance associated with a first move of the user input element according to an actuation direction exceeds a first threshold that is representative of a first distance, an actuation signal and a first haptic signal are generated. When a second travel distance associated with a second move of the user input element, which temporally follows the first move and occurs in a release direction that is opposite to the actuation direction, exceeds a second threshold that is representative of a second distance, a release signal and a second haptic signal are generated.

The first and second thresholds are each representative of a distance that is relative to a starting point, which enables the user input element to alternate between an actuated state and a released state without passing through a rest / idle position of the user input element. The user input element may successively alternate between the actuated state and the released state while staying pressed, which enable to increase the actuation frequency of the user input element.

The generation of a haptic signal each time the user input element is actuated and released provide feedback to the user manipulating the user input element and informing the user when the user input element is actuated and released.

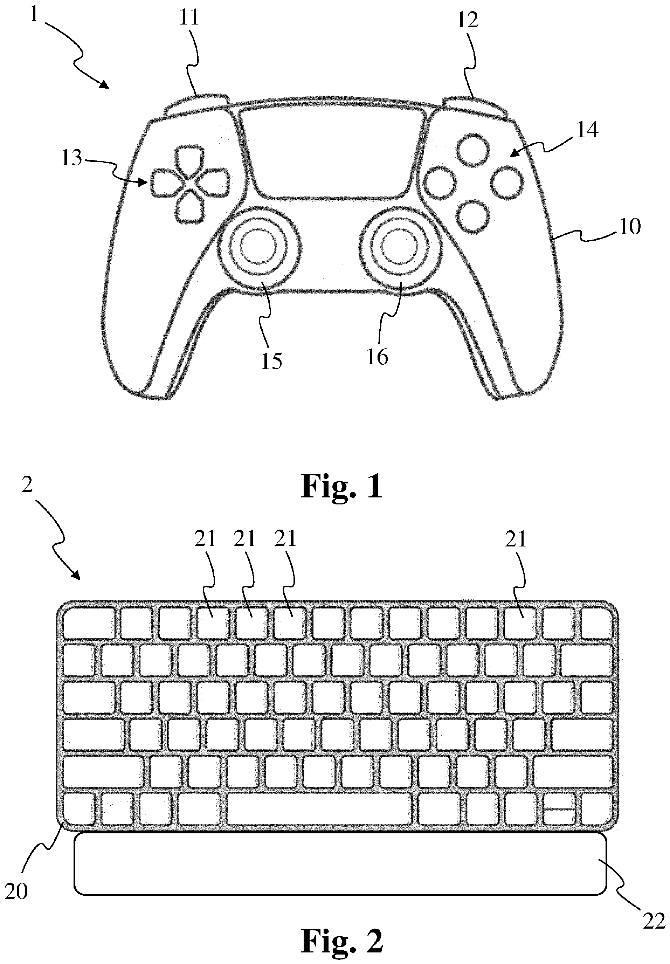

**Figure 1** illustrates a schematic representation of a peripheral device 1 in accordance with at least one exemplary embodiment.

Figure 1 shows a peripheral device 1 corresponding to a game controller, also called controller.

The game controller comprises a set of user input elements 11 to 16 each configured to be manipulated and controlled by a user, specifically by one or more fingers of a user holding the game controller in his hands.

The game controller is configured to be coupled to an electronic device or computing device corresponding to any device or apparatus configured to run a application software and/or a game, e.g., a computer, a laptop, a game console, a set-top box, etc. The game controller is configured to be coupled or connected to the electronic device or computing device via wired (e.g., USB) or wireless connection (e.g., Bluetooth^{®} or Wifi^{®}).

According to the example of Figure 1, the set of user input elements 11 to 16 comprises:
- A left trigger 11 and a right trigger 12, each configured to be actuated, e.g., depressed, by a finger of the user, e.g., the index or middle finger of left hand for the left trigger 11 and the index or middle finger of right hand for the right trigger 12;
- A directional pad 13 comprising 4 buttons each associated with a direction, i.e., forward, backward, strafing left and strafing right;
- Action buttons 14 comprising for example 4 buttons each associated with a specific action or function that may depend on the application software or game controlled with the game controller 1; and
- A left stick 15 and a right stick 16 configured to be actuated or manipulated by the left and right fingers of the user, respectively.

Actions or functions are associated with each of the user input element 11 to 16, the actions or functions varying from a user input element to another user input element. Action or function associated with a user input element may further be dependent on the game the user is playing with the game controller 1.

For example, the right and/or left triggers 11, 12 may be actuated to shoot or strike, the directional pad 13 and/or the left and right sticks 15, 16 may be used to control the move of an avatar in a virtual environment.

One or more haptic actuators are integrated into the game controller.

According to an embodiment, one haptic actuator is comprised in each user input element of at least a part of the set of user input elements 11 to 16. For example, one haptic actuator is comprised in each of the right and left triggers 11, 12, such haptic actuator being configured to render a vibrotactile haptic effect on the finger actuating the trigger. According to a variant, the haptic actuator is configured to render various haptic sensations, the haptic actuator corresponding for example to a magnetorheological actuator, e.g., a haptic actuator based on magnetorheological fluids, or to a DC-motor based actuator such as ERMs. With such haptic actuators, the haptic effect is obtained by controlling or changing the friction force or the resistive force. Magnetorheological actuators are for example described in the article "Investigation of a haptic actuator made with magneto-rheological fluids for haptic shoes applications", by Hong Hae Heo et al., published on 29 December 2020.

According to another embodiment, one or more haptic actuators are arranged in the housing 10 of the game controller 1 to vibrate the housing 10. The one or more haptic actuators may for example be arranged in the housing 10 to vibrate the housing where the palms of the user holding the game controller 1 rest.

The one or more haptic actuators are controlled with haptic signals generated by a circuitry or processing unit, which is comprised in the game controller 1. According to a variant, the haptic signals are generated by a remote processing unit and transmitted to the one or more haptic actuators via the wired or wireless connection coupling the game controller 1 with the remote processing unit. The control of the one or more haptic actuators by the circuitry or processing unit enables to reduce latency between the actuation of the user input element and the rendering of the haptic effect(s) by the one or more haptic actuators, the latency needed to be less than 10 ms.

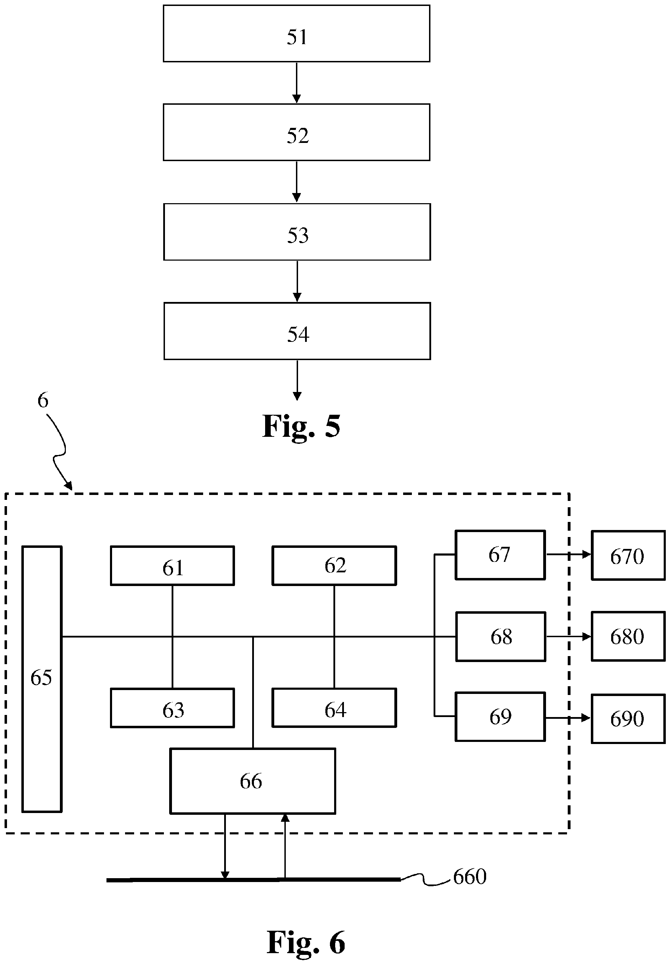

Exemplary embodiments of such a processing unit are described hereinbelow with reference to figure 6.

**Figure 2** illustrates a schematic representation of a peripheral device 2 in accordance with at least one exemplary embodiment.

Figure 2 shows a peripheral device 2 corresponding to a keyboard. The keyboard may be a standard keyboard or a gaming keypad. A gaming keypad has a limited number of keys with respect to the standard keyboard.

The keyboard comprises an arrangement of user input elements corresponding to buttons or keys 21 to act as switches.

An action of function is associated with each key, the action of function being implemented when the associated key is actuated. When gaming with a standard keyboard, only a part of the keys of the keyboard are used, for example the WASD keys of a QWERTY keyboard and the ZQSD keys of an AZERTY keyboard. The WASD are commonly used to control avatar movements in computer games, keys W and S being used to control forward and backward while A and D are used to control strafing left and right. Other keys like the space bar, the control key, the shift key and others may be used to control avatar actions, e.g., jump, crouch, sprint, shoot, strike, etc.

When used as an input peripheral device of an application software running on a computer different from a game, the actions or functions associated with the keys 21 may vary. When used as a text entry interface, the keyboard is used for typing text, numbers and symbols into application software such as a word processor, web browser or social media application. Some keys may prompt the computer to execute system commands.

The interpretation of key presses may be left to the software, the information sent to the computer, i.e., the so-called scan code, informing the software which physical key(s) was (were) actuated (or pressed) or released.

One or more haptic actuators are integrated into the keyboard.

According to an embodiment, one haptic actuator is comprised in each user input element (i.e., key) of at least a part of the set of user input elements (keys) 21. For example, one haptic actuator is comprised in each key, or at least in each key used as input interface of a game. The haptic actuator is for example embedded in the cap of the key and is configured to generate vibrations to transmit a vibrotactile haptic effect to the finger pressing the key.

According to another embodiment, one or more haptic actuators are arranged in the housing (or shell) of the keyboard to vibrate the housing 20.

According to a variant, a palm rest 22 is associated with the keyboard, for example coupled to the keyboard 2 via wired or wireless connection. According to this variant, one or more haptic actuators may be arranged in the palm rest 22 to vibrate the palm rest 22 and/or apply resistive forces when the user presses key(s) 21.

The one or more haptic actuators are controlled with haptic signals generated by a circuitry or processing unit, which is comprised in the keyboard 2. According to a variant, the haptic signals are generated by a remote processing unit and transmitted to the one or more haptic actuators via the wired or wireless connection coupling the keyboard 2 with the remote processing unit.

Exemplary embodiments of such a processing unit are described hereinbelow with reference to figure 6.

Naturally, the peripheral device is not limited to the examples of figures 1 and 2 but extends to any peripheral device, such as a mouse or a joystick, comprising one or more buttons configured to be actuated and released by a user.

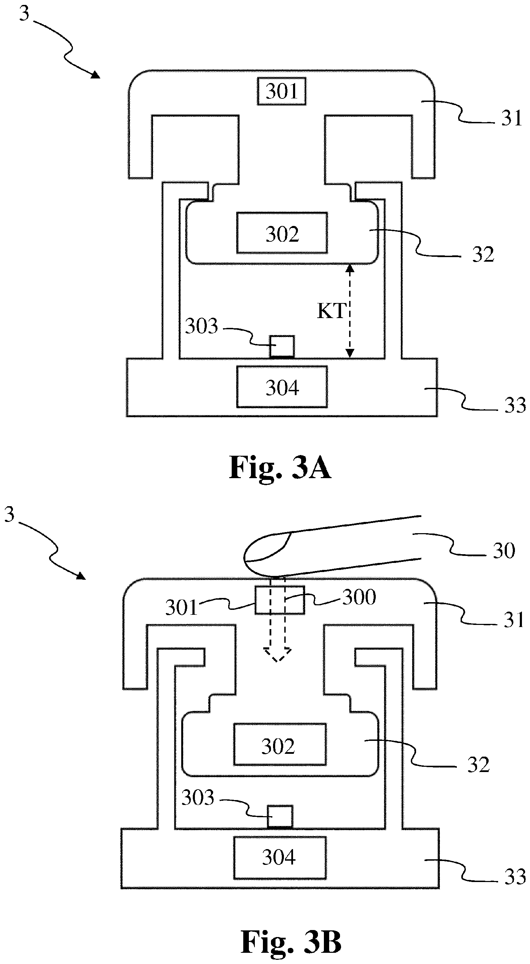

**Figures 3A and 3B** each illustrates a schematic representation of a user input element 3 in accordance with at least one exemplary embodiment.

The user input element 3 corresponds for example to a key 21 of the keyboard 2, a trigger 11, 12 or any button or stick of the game controller 1, a button of a mouse or any button of any peripheral device used as input or input/output interface of a game, application software, video content.

The user input element 3 comprises a movable part moving with respect to a fixed part. The movable part comprises a cap 31 and a stem or plunger 32. The cap 31 may be detachable from the stem 32 or the cap 31 and the stem 32 may form a single piece.

Figure 3A shows the user input element 3 in a first position or state corresponding to an idle or rest position / state of the user input element 3.

Figure 3B shows the user input element 3 in a second position or state corresponding to a pressed position / state of the user input element 3. The pressed state of the user input element 3 is obtained by pressing the mobile part of the user input element in an actuation direction, with a finger 30 of a user. The actuation direction is illustrated with a dotted arrow 300, which is oriented downwardly on figure 3B.

The user input element 3 may further comprise a return spring (not illustrated) arranged between the mobile part and the fixed part of the user input element, the return spring being configured to return the movable part upwards, according to a release direction, when no pressure is exerted on it, i.e., to pass the user input element 3 from the pressed state to the idle / rest state. The movable part moves according to the actuation direction as long as the pressure exerted on the movable part exceeds the spring return force, until the movable part is fully depressed (and reaches a blocking point).

The release direction is opposite to the actuation direction of the user input element 3.

The movement imparted to the movable part, when pressing the movable part with the finger 30, corresponds for example to a translation along a longitudinal axis of the user input element 3. According to another example, the movement imparted to the movable part corresponds to a rotation or to a translation along a radial axis, e.g., when the user input element 3 corresponds to a trigger comprising a lever.

The key travel, noted 'KT', of the movable part corresponds to the maximum distance the movable part can travel between the idle / rest position of Figure 3A and the maximum pressed position. The maximum pressed position is obtained when the movable part is fully depressed, i.e., until it reaches the blocking point while exerting a pressure on it according to the actuation direction.

The key travel 'KT' is defined according to a longitudinal axis of the user input element 3 in the example of figure 3A. According to a variant, the key travel `KT' may be defined according to a radial axis of the user input element, e.g., when the user input element corresponds to a trigger.

The user input element 3 advantageously comprises means for measuring the travel distance associated with a move of the user input element 3 according to the actuation direction 300, i.e., the distance travelled by the movable part when exerting a pressure on it with the finger 30.

The travel distance is for example comprised between 0 (when the user input element 3 is in the idle / rest state) and the key travel 'KT'. The key travel 'KT' is for example equal to 3, 4, 5 or 6 mm.

The user input element is in the pressed state when the travel distance is strictly greater than 0 or strictly greater than a minimum distance that is for example equal to 0.1, 0.2 or 0.3 mm.

The means for measuring the travel distance correspond to magnetic means, optical means, pressure means as known to those skilled in the art.

The magnetic means comprise for example:
- a first magnet element 302 arranged in the movable part of the user input element 3, for example in the stem 32;
- a second magnet element 304 arranged in the fixed part of the user input element 3, for example in an element 33 forming a base of the user input element 3, the base being for example fixed to the housing of the user input element 3 or being part of the housing; and
- a hall effect sensor 303 configured to measure the variation of the magnetic field generated when the first magnet element 302 moves with respect to the second magnet element 304 when moving the movable part of the user input element 3.

The hall effect sensor 303 is arranged between the first magnet element 302 and the second magnet element 304, for example arranged on the external surface of the base 33 of the user input element 3 facing the external surface of the stem 32.

The hall effect sensor 303 is communicatively coupled to the circuitry or processing unit of the peripheral device, which is configured to determine the travel distance according to the data received from the hall effect sensor 303. The hall effect sensor 303 is for example mounted on or connected to a PCB (Printed Circuit Board, not shown on figures 3A and 3B) being part of the circuitry or processing unit of the peripheral device 1, 2.

In an embodiment, the user input element 3 further comprises a haptic actuator 301, which is arranged in a way to transmit the haptic effect(s) it generates to the finger 30 pressing the user input element 3. The haptic actuator 301 is for example embedded in the cap 31 of the user input element 3. The material of the cap 31 is adapted to transmit the vibration generated by the haptic actuator 301 to the finger 30. The material may for example be a flexible and/or deformable material.

The haptic actuator 301 is configured to generate tactile haptic effects, e.g., vibrotactile haptic effects or resistive haptic effects, from haptic signal(s) received from the circuitry or processing unit of the peripheral device 1, 2. The haptic actuator 301 corresponds for example to one of the following actuators: ERM (Eccentric Rotating Mass), LRA (Linear Resonant Actuator), large bandwidth actuators like VCM (Voice Coil Motor) or PZT (Piezoelectric Actuator).

The haptic effect rendered by the haptic actuator 301 is for example generated according to a main direction that is orthogonal to the outer surface of the cap 31 receiving the pressure exerted by the finger 30.

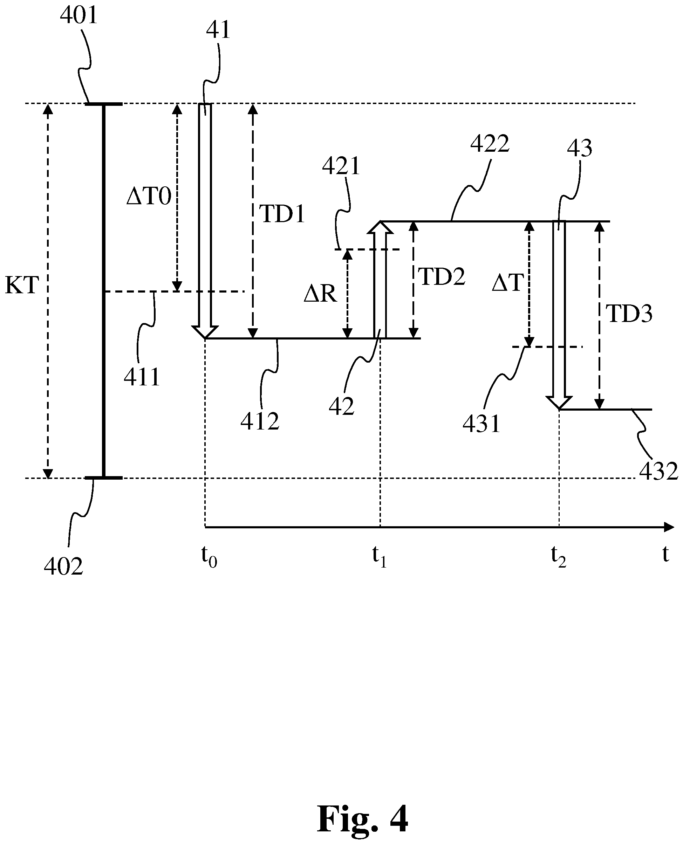

**Figure 4** illustrates a schematic representation of the control of the user input element 3 in accordance with at least one exemplary embodiment.

Figure 4 illustrates a temporal sequence of actuation and release of the user input element 3.

Moves 41, 42, 43 of the user input element 3 are illustrated with solid line arrows, the direction of the arrow indicating the direction of the move, i.e., actuation direction or release direction. On Figure 4, the actuation direction corresponds to the downward direction and the release direction corresponds to the upward direction, the release direction corresponding to the direction opposite to the actuation direction.

The actuation and release directions may correspond to horizontal, vertical, oblique or any direction, depending on the location of the user input element 3 on the peripheral device 1, 2 and/or the position and orientation of the peripheral device 1, 2 in world space.

The maximum distance that the movable part of the user input element 3 can travel when receiving a pressure to move it is called key travel and noted 'KT' on figure 4. The key travel 'KT' is comprised between a first position 401 of the user input element 3 (i.e., its movable part) corresponding to the idle / rest position or state of the user input element 3 and a second position 402 of the user input element 3 (i.e., its movable part) corresponding to the full depressed position or state of the user input element 3.

A process of controlling a user input element of a peripheral device, e.g., the user input element 3 of the peripheral device 1 or 2, is implemented by one or more processors, e.g., one or more processors of a processing unit comprised in the peripheral device.

Such process may correspond to a process of determining actuation and release states taken successively by a user input element under the action of a user exerting a pressure on the user input element, i.e., on the movable part of the user input element 3.

In a first operation of the process, a first travel distance, noted 'TD1'associated with a first move 41 of the user input element 3 according to an actuation direction 300 of the user input element is determined or measured.

The first move 41 is obtained at time 't1' by a pressure exerted by a finger of a user on the outer surface of the movable part of the user input element 3, as described with respect to figure 3B.

The first travel distance 'TD1' is comprised between the first position 401 of the movable part of the user input element 3 and a first intermediary position 412 taken by the movable part at the end of the first move 41, e.g., when the force applied by the user on the outer surface of the movable part equals the return force of the return spring.

The first travel distance 'TD1' is less than the key travel `KT', the user input element 3 being in a pressed state at the end of the first move 41.

The first travel distance 'TD1' is for example determined or measured according to data acquired by the hall effect sensor 303 (and received from the hall effect sensor 303), the travel distance being determined as a function of the variation of the magnetic field generated by the displacement of the first magnet element 302 with respect to the second magnet element 304, as known to those skilled in the art.

According to a variant, the first travel distance `TD1' is determined or measured according to data acquired by an optical sensor associated with a light emitting device when the user input element 3 comprises optical means to determine the distance travelled by the movable part. As known to those skilled in the art, the optical sensor is configured to determine the time of travel between the emission of the light by the light emitting device and the reception of the light by the optical sensor, the light travelling from the light emitting device to the movable part before reaching the optical sensor.

According to another variant, the first travel distance 'TD1' is determined or measured according to data acquired by a pressure sensor when the user input element 3 comprises pressure measuring means to determine the distance travelled by the movable part.

In a second operation of the process, an actuation signal and a first haptic signal are generated when the first travel distance 'TD1' is greater than a first threshold representative of a first distance '1:1 TO', the first haptic signal being representative of a first haptic effect, e.g., a vibrotactile effect.

According to the data received by the hall effect sensor 303 (or any sensor acquiring data enabling the measure of the travel distance of the movable part of the user input element 3), an actuation signal and a first haptic signal are generated when the first travel distance `TD1' exceeds the first threshold, i.e., when the movable part reaches a first depressed position 411 that is defined relatively to the first position 401 with the first threshold representative of a first distance '1:1 TO'. The first depressed position 411 corresponds to the point located at the first distance 'ΔT0' from the first position 401.

The value of threshold representative of a first distance 'ΔT0' is less than the value of the key travel `KT', i.e., ΔT0 < KT.

For example, if KT = 4 mm, then ΔT0 may be comprised between 2 and 3 mm or comprised between 1.5 and 3.5 mm, i.e., ΔT0 is comprised between a minimal value and a maximal value, which are both according to KT.

A predefined value of ΔT0 is stored in a memory of the processing unit implementing the process. In a variant, ΔT0 corresponds to a parameter of the system and is adjustable by the user via a Graphical User Interface (GUI) associated with an application software executable by the computing device the peripheral device is connected to. According to this variant, ΔT0 corresponds to an adjustable or tunable parameter of the control system of the user input element 3 and/or peripheral device. ΔT0 corresponds for example to a unique parameter that is applied to all user input elements of the peripheral device. According to another example, ΔT0 is specific and unique for each user input element 3 of the peripheral device and may be individually adjusted for each user input element 3.

The actuation signal switches or passes the user input element 3 into the actuated state.

The actuation signal is transmitted to the computing device running the application software or the game and coupled to the peripheral device. The function or action associated with the actuation of the user input element 3 is performed by the computing device in response to the received actuation signal.

In a third operation of the process, the first haptic signal is transmitted by the processing unit of the peripheral device (to reduce latency) to the haptic actuator 301, which generates the first haptic effect in response to the received first haptic signal.

The generation of the first haptic effect provides feedback to the user pressing on the user input element 3 to inform the user that the user input element 3 has been actuated, which triggers the associated action or function. The haptic feedback informs the user when the actuation point of the user input element 3 corresponding to the first depressed position 411 has been reached.

In a fourth operation of the process, a second travel distance, noted 'TD2'associated with a second move 42 of the user input element 3 according to a release direction of the user input element is determined or measured. The release direction is the opposite of the actuation direction.

The second move 42 is obtained at time `t2' by releasing the pressure exerted by the user on the outer surface of the movable part of the user input element 3, as described with respect to figure 3B.

The second move 42 follows temporally the first move 41. The user reduces the pressure exerted on the user input element 3 when receiving the information that the user input element 3 has been actuated, i.e., when the first haptic effect has been generated or rendered by the haptic actuator 301. The second move 42 of the user input element 3 is for example obtained when the force resulting from the pressure exerted by the user is less than the return force of the return spring.

The second travel distance 'TD2' is comprised between the first intermediary position 412 taken by the movable part at the end of the first move 41 and a second intermediary position 422 taken by the movable part at the end of the second move 42, e.g., when the force applied by the user on the outer surface of the movable part becomes equal to the return force of the return spring.

The second travel distance 'TD2' is less than the first travel distance `TD1', the user input element 3 remaining in the pressed state at the end of the second move 42.

The second travel distance 'TD2' is determined or measured just like the first move 41, e.g., according to data acquired by the hall effect sensor 303 (and received from the hall effect sensor 303).

In a fifth operation of the process, a release signal and a second haptic signal are generated when the second travel distance 'TD2' is greater than a second threshold representative of a second distance 'ΔR' (also called release distance threshold), the second haptic signal being representative of a second haptic effect that may be the same as the first haptic effect, or different, e.g., a different vibrotactile effect.

According to an embodiment, the second haptic signal is identical to the first haptic signal when the first haptic effect and the second haptic effect correspond to one and a same haptic effect.

According to another embodiment, the first and second haptic signals are different, e.g., the amplitude and/or frequency of the first haptic signal is different from the amplitude and/or frequency of the second haptic signal, which result in different first and second haptic effect (e.g., different in amplitude and/or frequency).

The first haptic signal, and associated first haptic effect, may be representative of the transition into the actuated state of the input user element 3 while the second haptic signal, and associated second haptic effect, when different from the first haptic signal, and associated first haptic effect, may be representative of the transition into the released state of the input user element 3. The first haptic effect may have characteristics (amplitude and/or frequency), which are representative of the transition into the actuated state and the second haptic effect may have characteristics (amplitude and/or frequency) different from the characteristics of the first haptic effect, which are representative of the transition into the released state. The user may then differentiate between transition into the actuated state and transition into the released state via the haptic feedback.

According to the data received by the hall effect sensor 303 (or any sensor acquiring data enabling the measure of the travel distance of the movable part of the user input element 3), a release signal and a second haptic signal are generated when the second travel distance 'TD2' exceeds the second threshold, i.e., when the movable part reaches a second depressed position 421 that is defined relatively to the first intermediary position 412 reached at the end of the first move 41 with the second threshold representative of a second distance 'ΔR'. The second depressed position 421 corresponds to the point located at the second distance 'ΔR' from the first intermediary position 412.

The value of the second threshold representative of a second distance 'ΔR' is advantageously less than the value of the first threshold representative of a first distance 'ΔT0', i.e., ΔR < ΔT0. It enables that the user input element 3 remains in the pressed state at the end of the second move.

A predefined value of ΔR is stored in the memory of the processing unit implementing the process. In a variant, ΔR corresponds to a parameter of the system and is adjustable by the user via a Graphical User Interface (GUI) associated with an application software executable by the computing device the peripheral device is connected to. According to this variant, ΔR corresponds to an adjustable or tunable parameter of the control system of the user input element 3 and/or peripheral device. ΔR corresponds for example to a unique parameter that is applied to all user input elements of the peripheral device. According to another example, ΔR is specific and unique for each user input element 3 of the peripheral device and may be individually adjusted for each user input element 3.

The release signal switches or passes the user input element into the released state, even if the user input element 3 remains depressed, i.e., remains in the pressed state.

The transition to the release state allows the user input element 3 to be actuated again.

The release signal may for example be transmitted to the computing device running the application software or the game and coupled to the peripheral device.

In a sixth operation of the process, the second haptic signal is transmitted by the processing unit of the peripheral device to the haptic actuator 301, which generates the second haptic effect in response to the received second haptic signal.

The generation of the second haptic effect provides feedback to the user pressing on the user input element 3 to inform the user that the user input element 3 has been released. The haptic feedback informs the user when the release point of the user input element 3 corresponding to the second depressed position 421 has been reached.

In a seventh operation of the process, a third travel distance, noted 'TD3'associated with a third move 43 of the user input element 3 according to the actuation direction of the user input element 3 is determined or measured.

The third move 42 is obtained at time 't3' by increasing the pressure exerted by the user on the outer surface of the movable part of the user input element 3, as described with respect to figure 3B.

The third move 43 follows temporally the second move 42. The user increases the pressure exerted on the user input element 3 when receiving the information that the user input element 3 has been released, i.e., when the second haptic effect has been generated or rendered by the haptic actuator 301. The third move 43 of the user input element 3 is for example obtained when the force resulting from the pressure exerted by the user is greater than the return force of the return spring.

The third travel distance 'TD3' is comprised between the second intermediary position 422 taken by the movable part at the end of the second move 42 and a third intermediary position 432 taken by the movable part at the end of the third move 42, e.g., when the force applied by the user on the outer surface of the movable part becomes equal to the return force of the return spring.

The third travel distance 'TD3' is determined or measured just like the first move 41 and the second move 42, e.g., according to data acquired by the hall effect sensor 303 (and received from the hall effect sensor 303).

In an eighth operation of the process, the actuation signal (same as for the second operation) and a second haptic signal are generated when the third travel distance 'TD3' is greater than a third threshold representative of a third distance 'ΔT' (also called actuation distance threshold), the third haptic signal being representative of a third haptic effect that may be the same as the first haptic effect, or different, e.g., a different vibrotactile effect.

According to an embodiment, the third haptic signal is identical to the first haptic signal, the first haptic effect and the third haptic effect corresponding to one and a same haptic effect, a haptic effect signaling the transition to the actuated state for the user input element 3.

According to another embodiment, the first and third haptic signals are different, e.g., the amplitude and/or frequency of the first haptic signal is different from the amplitude and/or frequency of the third haptic signal, which result in different first and third haptic effect (e.g., different in amplitude and/or frequency).

According to the data received by the hall effect sensor 303 (or any sensor acquiring data enabling the measure of the travel distance of the movable part of the user input element 3), the actuation signal and a third haptic signal are generated when the third travel distance 'TD3' exceeds the third threshold, i.e., when the movable part reaches a third depressed position 431 that is defined relatively to the second intermediary position 422 reached at the end of the second move 42 with the third threshold representative of a third distance 'ΔT'. The third depressed position 431 corresponds to the point located at the third distance 'ΔT' from the second intermediary position 422.

The value of the third threshold representative of a third distance 'ΔT' is for example less than the value of the first threshold representative of a first distance 'ΔT0', i.e., ΔR < ΔT0.

ΔR and ΔT are advantageously chosen or set in a way that successive release and actuation operations of the user input element 3 let the user input element 3 in the pressed state.

According to a specific embodiment, the second threshold and the third threshold are equal and representative of a same distance, i.e., ΔR = ΔT.

A predefined value of ΔT is stored in the memory of the processing unit implementing the process. In a variant, ΔT corresponds to a parameter of the system and is adjustable by the user via a Graphical User Interface (GUI) associated with an application software executable by the computing device the peripheral device is connected to. According to this variant, ΔT corresponds to an adjustable or tunable parameter of the control system of the user input element 3 and/or peripheral device. ΔT corresponds for example to a unique parameter that is applied to all user input elements of the peripheral device. According to another example, ΔT is specific and unique for each user input element 3 of the peripheral device and may be individually adjusted for each user input element 3.

The actuation signal switches or passes the user input element 3 into the actuated state.

The actuation signal is transmitted to the computing device running the application software or the game and coupled to the peripheral device. The function or action associated with the actuation of the user input element 3 is performed by the computing device in response to the newly received actuation signal.

In a ninth operation of the process, the third haptic signal is transmitted by the processing unit of the peripheral device to the haptic actuator 301, which generates the third haptic effect in response to the received third haptic signal.

The generation of the third haptic effect provides feedback to the user pressing on the user input element 3 to inform the user that the user input element 3 has been actuated again. The haptic feedback informs the user when the actuation point of the user input element 3 corresponding to the third depressed position 431 has been reached.

The process may go on with further operations where the user input element 3 alternates between the actuated state and the released state, the fourth to ninth operations being reiterated as long as the user operates the user input element as described with reference to the fourth to ninth operations.

Such a process enables the user to actuate repetitively the user input element 3 and to triggers the action or function associated with the actuation of the user input element 3, while maintaining the user input element 3 in the pressed state. It allows the user to speed up the triggering of the action or function associated with the actuation of the user input element 3, as there is no need that the user input element 3 passes through the idle state between two successive actuations. The generation of haptic effect at each actuation and release of the user input element 3 provides tactile feedback to the user about when the user input element 3 transits from a state (i.e., actuated or released) to another state (i.e., released or actuated, respectively).

The process ends when the user stop pressing the user input element 3, the user input element 3 then coming back into the idle / rest state or position 401.

According to an embodiment, the process of the present disclosure relates to the successive transition between actuated and released state of the user input element 3 when the user input element 3 is depressed, i.e., in the pressed state. According to this embodiment, the first move 41 starts with the user input element 3 being already depressed.

**Figure 5** shows a schematic block diagram of steps of a method of controlling a user input element of a peripheral device in accordance with at least one exemplary embodiment.

In a first step 51, a first travel distance associated with a first move of the user input element according to an actuation direction of the user input element is determined.

In a second step 52, an actuation signal and a first haptic signal are generated when the first travel distance is greater than a first threshold representative of a first distance, the first haptic signal being representative of a first haptic effect.

In a third step 53, a second travel distance associated with a second move of the user input element according to a release direction of the user input element is determined, the release direction being opposite to the actuation direction, the second move temporally following the first move.

In a fourth step 54, a release signal and a second haptic signal are generated when the second travel distance is greater than a second threshold representative of a second distance, the second haptic signal being representative of a second haptic effect.

According to an exemplary embodiment of the method, the method further comprises the steps of:
- determining a third travel distance associated with a third move of the user input element according to the actuation direction, the third move temporally following the second move; and
- generating the actuation signal and a third haptic signal when the third travel distance is greater than a third threshold representative of a third distance, the third haptic signal being representative of a third haptic effect.

**Figure 6** shows a schematic block diagram illustrating an example of an apparatus 6 in which various aspects and exemplary embodiments are implemented.

Apparatus 6 may be embedded as one or more devices including the various components described below. In various embodiments, the apparatus 6 may be configured to implement one or more of the aspects described in the present application.

Examples of equipment that may form all or part of the apparatus 6 include peripheral device such as a game controller or controller, a keyboard, a mouse or any peripheral device comprising one or more user input element configured to be connected to personal computers, laptops, smartphones, tablet computers, digital multimedia set top boxes and their associated processing apparatus, head mounted display devices (HMD, see-through glasses), caves" (apparatus including multiple displays), servers, or other communication devices. Elements of apparatus 6, singly or in combination, may be embodied in a single integrated circuit (IC), multiple ICs, and/or discrete components. For example, in at least one embodiment, the processing and encoder/decoder elements of apparatus 6 may be distributed across multiple ICs and/or discrete components. In various embodiments, the apparatus 6 may be communicatively coupled to other similar apparatus, or to other electronic devices, via, for example, a communications bus or through dedicated input and/or output ports.

Other examples of equipment that may form all or part of the apparatus 6 include personal computers, laptops, smartphones, tablet computers, digital multimedia set top boxes and their associated processing apparatus, head mounted display devices (HMD, see-through glasses), caves" (apparatus including multiple displays), servers, or other communication devices.

The apparatus 6 may include at least one processor 61 configured to execute instructions loaded therein for implementing, for example, the various aspects described in the present application. Processor 61 may include embedded memory, input output interface, and various other circuitries as known in the art. The apparatus 6 may include at least one memory 62 (for example a volatile memory device and/or a non-volatile memory device). Apparatus 6 may include a storage device 64, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 64 may include an internal storage device, an attached storage device, and/or a network accessible storage device, as non-limiting examples.

The apparatus 6 may include an encoder/decoder module 63 configured, for example, to process data to provide encoded/decoded haptic signal or data, and the encoder/decoder module 63 may include its own processor and memory. The encoder/decoder module 63 may represent module(s) that may be included in a device to perform the encoding and/or decoding functions. As is known, a device may include one or both of the encoding and decoding modules. Additionally, encoder/decoder module 63 may be implemented as a separate element of apparatus 6 or may be incorporated within processor 61 as a combination of hardware and software as known to those skilled in the art.

Program code to be loaded onto processor 61 or encoder/decoder 63 to perform the various aspects described in the present application may be stored in storage device 64 and subsequently loaded onto memory 62 for execution by processor 61. In accordance with various embodiments, one or more of processor 61, memory 62, storage device 64, and encoder/decoder module 63 may store one or more of various items during the performance of the processes described in the present application. Such stored items may include, but are not limited to, data representative of audio content, data representative of video content, haptic-related data, a bitstream, matrices, variables, and intermediate or final results from the processing of equations, formulas, operations, and operational logic.

In several embodiments, memory inside of the processor 61 and/or the encoder/decoder module 63 may be used to store instructions and to provide working memory for processing that may be performed during data processing, encoding or decoding.

In other embodiments, however, a memory external to the processing device (for example, the processing device may be the processor) may be used for one or more of these functions. The external memory may be the memory 62 and/or the storage device 64, for example, a dynamic volatile memory and/or a non-volatile flash memory. In at least one embodiment, a fast external dynamic volatile memory such as a RAM may be used as working memory for data processing.

The input to the elements of apparatus 6 may be provided through various input devices as indicated in block 65. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting apparatus 6 to other electronic devices across USB and/or HDMI connections. It is to be understood that various aspects of input processing, for example, analog to digital conversion, time domain to frequency domain conversion, down sampling, band pass or low pass filtering, Reed-Solomon error correction, may be implemented, for example, within a separate input processing IC or within processor 61 as necessary. Similarly, aspects of USB or HDMI interface processing may be implemented within separate interface ICs or within processor 61 as necessary. The processed stream may be provided to various processing elements, including, for example, processor 61, and encoder/decoder 63 operating in combination with the memory and storage elements to process the data stream as necessary for presentation on an output device.

Various elements of apparatus 6 may be provided within an integrated housing. Within the integrated housing, the various elements may be interconnected and transmit data therebetween using suitable connection arrangement, for example, an internal bus as known in the art, including the I2C bus, wiring, and printed circuit boards.

The apparatus 6 may include communication interface 66 that enables communication with other devices via communication channel 660. The communication interface 66 may include, but is not limited to, a transceiver configured to transmit and to receive data over communication channel 660. The communication interface 66 may include, but is not limited to, a modem or network card and the communication channel 660 may be implemented, for example, within a wired and/or a wireless medium.

The apparatus 6 may provide an output signal to various output devices, including a display 670, computing device or game console 680, and other electronic devices 690 and/or haptic devices/actuators.

In various embodiments, control signals may be communicated between the apparatus 6 and the display 670, computing device or game console 680, or other peripheral devices 690 using signaling such as AV.Link (Audio/Video Link), CEC (Consumer Electronics Control), Audio protocols, USB (Universal Serial Bus), HIF UHP (Haptics Industry Forum - Universal Haptic Protocol) or other communications protocols that enable device-to-device control with or without user intervention.

The output devices may be communicatively coupled to apparatus 6 via dedicated connections through respective interfaces 67, 68, and 69.

Alternatively, the output devices may be connected to apparatus 6 using the communications channel 660 via the communications interface 66. The display 670, computing device or game console 680 and/or haptic device(s) (actuators) may be integrated in a single unit with the other components of apparatus 6 in an electronic.

The display 670, computing device or game console 680 and/or other electronic devices 690 may alternatively be separate from one or more of the other components. In various embodiments in which the display 670, computing device or game console 680 and/or other electronic devices 690 may be external components, the output signal may be provided via dedicated output connections, including, for example, HDMI ports, USB ports, or COMP outputs.

In **Figures 1 to 6****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor apparatus, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating apparatus, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include input peripheral device, input/output peripheral device, personal computers, laptops, smartphones, tablet computers, digital multimedia set top boxes, digital television receivers, personal video recording apparatus, connected home appliances, head mounted display devices (HMD, see-through glasses), projectors (beamers), "caves" (apparatus including multiple displays), servers, video and/or haptic encoders, video and/or haptic decoders, haptic engine, post-processors processing output from a video decoder, pre-processors providing input to a video encoder, web servers, set-top boxes, wireless connected wearable haptic devices, e.g., Bluetooth^{®} connected wearable haptic devices, game controller, mouse, mousepad, keyboard, palm rest, chairs, desk, XR headset, headphones, bracelet, head and/or lumbar support device or chair, and any other device for processing haptic data or signals representative of one or more haptic feedback or effect, or other communication devices. As should be clear, the equipment may be mobile.

Computer software may be implemented by the processor 61 or by hardware, or by a combination of hardware and software. As a non-limiting example, the embodiments may be also implemented by one or more integrated circuits. The memory 62 may be of any type appropriate to the technical environment and may be implemented using any appropriate data storage technology, such as optical memory devices, magnetic memory devices, semiconductor-based memory devices, fixed memory, and removable memory, as non-limiting examples. The processor 61 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Additionally, this application may refer to "obtaining" various pieces of information. Obtaining the information may include one or more of, for example, receiving the information, determining the information, estimating the information, calculating the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, or estimating the information.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of controlling a user input element (3) of a peripheral device (1, 2), the method comprising the steps of:
- determining (51) a first travel distance (TD1) associated with a first move (41) of said user input element (3) according to an actuation direction (300) of said user input element (3);
- generating (52) an actuation signal and a first haptic signal when said first travel distance (TD1) is greater than a first threshold representative of a first distance (ΔT0), said first haptic signal being representative of a first haptic effect;
- determining (53) a second travel distance (TD2) associated with a second move (42) of said user input element (3) according to a release direction of said user input element (3), said release direction being opposite to said actuation direction (300), said second move (42) temporally following said first move (41); and
- generating (54) a release signal and a second haptic signal when said second travel distance (TD2) is greater than a second threshold representative of a second distance (ΔR), said second haptic signal being representative of a second haptic effect.

2. The method according to claim 1, wherein said user input element (3) being configured to be in an idle state and in a pressed state, said first move taking the user input element from said idle state to said pressed state, said user input element (3) being in said pressed state at the end of said second move (42), the method further comprising:
- determining a third travel distance (TD3) associated with a third move (43) of said user input element (3) according to said actuation direction (300), said third move (43) temporally following the second move (42); and
- generating said actuation signal and a third haptic signal when said third travel distance (TD3) is greater than a third threshold representative of a third distance (ΔT), said third haptic signal being representative of a third haptic effect.

3. The method according to claim 2, wherein said first, second and third haptic effects correspond to a same haptic effect.

4. The method according to claim 2, wherein the first and third haptic effects correspond to a same effect representative of a transition into an actuated state of the user input element (3) and the second haptic effect is representative of a transition into a released state of the user input element (3).

5. The method according to one of claims 2 to 4, wherein the second threshold and the third threshold correspond to a same threshold, the second distance (ΔR) being equal to the third distance (ΔT).

6. The method according to one of claim 2 to 5, further comprising adjusting at least one of said first, second and third thresholds.

7. The method according to one of claims 2 to 6, further comprising rendering said first, second and third haptic effects in said user input element based on said first, second and third haptic signal, respectively.

8. The method according to one of claims 2 to 7, wherein said first, second and third haptic effects each correspond to a vibratory effect.

9. The method according to one of claims 2 to 8, wherein said second distance (ΔR) is less than said first distance (ΔT0) and said third distance (ΔT) is less than said first distance (ΔT0).

10. The method according to one of claims 1 to 9, wherein each of said determining comprises determining a value representative of a variation in a magnetic field.

11. An apparatus (6) of controlling a user input element of a peripheral device, wherein said apparatus comprising a memory (62) associated with at least a processor (691) configured to implement the method according to any one of claims 1 to 10.

12. A peripheral device comprising the apparatus (6) according to claim 9 and a set of user input elements comprising at least one user input element (3), each user input element of at least a part of said set of user input elements comprising a haptic actuator (301), each user input element of said set of user input elements and each haptic actuator (301) being communicatively coupled to said apparatus (6).

13. A computer program product comprising instructions of program code for executing the method according to any one of claims 1 to 10, when said program is executed on a computer.
